Europäisches Patentamt

European Patent Office

Office européen des brevets

(19)

(11) Numéro de publication : **0 493 256 B1**

## (12) FASCICULE DE BREVET EUROPEEN

(45) Date de publication du fascicule du brevet :
06.12.95 Bulletin 95/49

(51) Int. Cl.⁶ : **G01S 3/784, F42C 13/02**

(21) Numéro de dépôt : **91403540.7**

(22) Date de dépôt : **26.12.91**

(54) **Procédé et dispositif de détection de proximité sectorielle d'une cible et munition utilisant le dispositif.**

(30) Priorité : **28.12.90 FR 9016436**

(43) Date de publication de la demande :
**01.07.92 Bulletin 92/27**

(45) Mention de la délivrance du brevet :
**06.12.95 Bulletin 95/49**

(84) Etats contractants désignés :
**AT BE CH DE DK ES FR GB GR IT LI LU NL SE**

(56) Documents cités :
**EP-A- 0 139 322
DE-A- 2 714 178
DE-B- 1 548 382
FR-A- 2 319 137
FR-A- 2 612 288
GB-A- 1 511 641
US-A- 4 195 574
PATENT ABSTRACTS OF JAPAN vol. 10, no.
64 (P-436)(2121), 14 mars 1986 &
JP-A-60205381**

(73) Titulaire : **THOMSON-BRANDT ARMEMENTS
Tour Chenonceaux
204, rond-point du Pont de Sèvres
F-92516 Boulogne-Billancourt (FR)**

(72) Inventeur : **Wisshaupt, Daniel
THOMSON-CSF,
SCPI,
Cédex 67
F-92045 Paris la Défense (FR)**

(74) Mandataire : **Benoit, Monique
THOMSON-CSF
SCPI
B.P. 329
50, rue Jean-Pierre Timbaud
F-92402 Courbevoie Cédex (FR)**

# Description

La présente invention se situe dans le domaine des dispositifs optiques et optroniques de détection de proximité.

De tels détecteurs sont connus dans l'art. Ils sont montés sur des missiles ou des munitions et leur fonction est de déclencher la mise à feu de la munition ou d'une charge militaire transportée par le missile lorsque la munition ou le missile arrivent "à proximité" d'une cible.

A cette fin, les détecteurs connus dans l'art comportent une fenêtre, ménagée dans l'ogive ou le corps de la munition transparente dans la bande de détection choisie, et une optique permettant d'obtenir un angle d'observation θ par rapport à l'axe longitudinal XX' du missile ou de la munition. L'angle θ est en général légèrement inférieur à 90° . Cette optique permet la capture de radiations dans un angle solide de révolution autour de l'axe du missile ou de la munition.

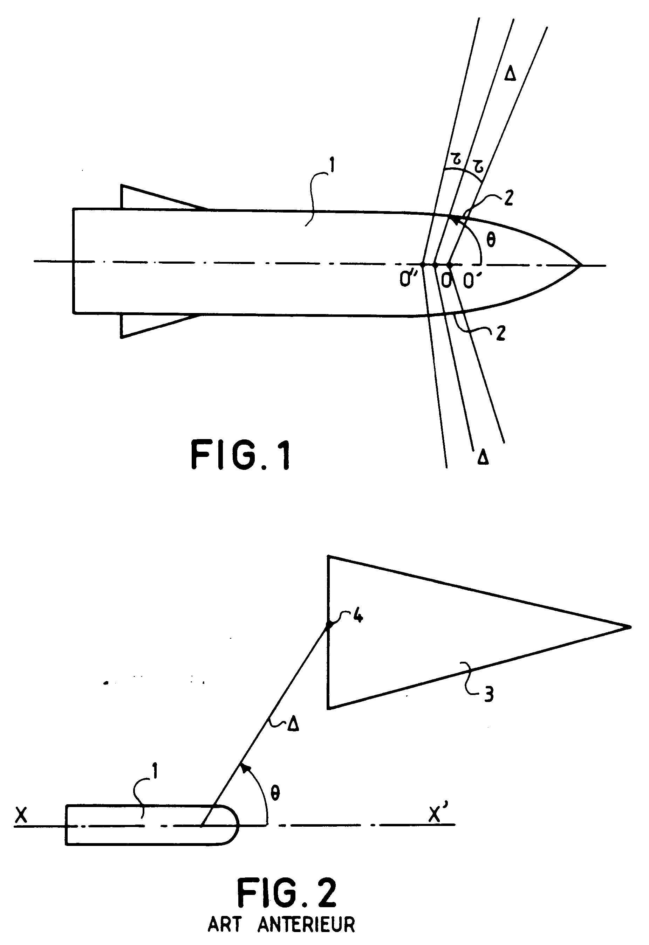

Les radiations émises par la cible dans l'angle solide déterminé par l'optique d'entrée sont captées par un miroir et renvoyées vers un détecteur de ces radiations. Cet état de la technique est illustré par les figures 1, 2 et 3.

Sur la figure 1 est représenté un missile 1, comportant une fenêtre 2 de détection. L'axe bissecteur d'une coupe transversale du champ fait avec l'axe longitudinal XX' du missile un angle θ légèrement inférieur à 90°. Les deux axes bissecteurs Δ situés de part et d'autre de l'axe de symétrie du missile ou du projectile se coupent au point 0. L'angle d'ouverture de cette fenêtre est 2τ. La fenêtre permet de capter les radiations en provenance de tout point d'un volume de révolution limité par deux surfaces. La première de ces surfaces est un cône de révolution ayant pour sommet un point 0' situé très légèrement en avant du point 0 et pour génératrice une droite faisant avec l'axe XX' un angle (θ-τ). La seconde de ces surfaces est un cône de révolution ayant pour sommet un point 0" situé légèrement en arrière des point 0 et pour génératrice une droite faisant avec l'axe de révolution du missile un angle (θ + τ).

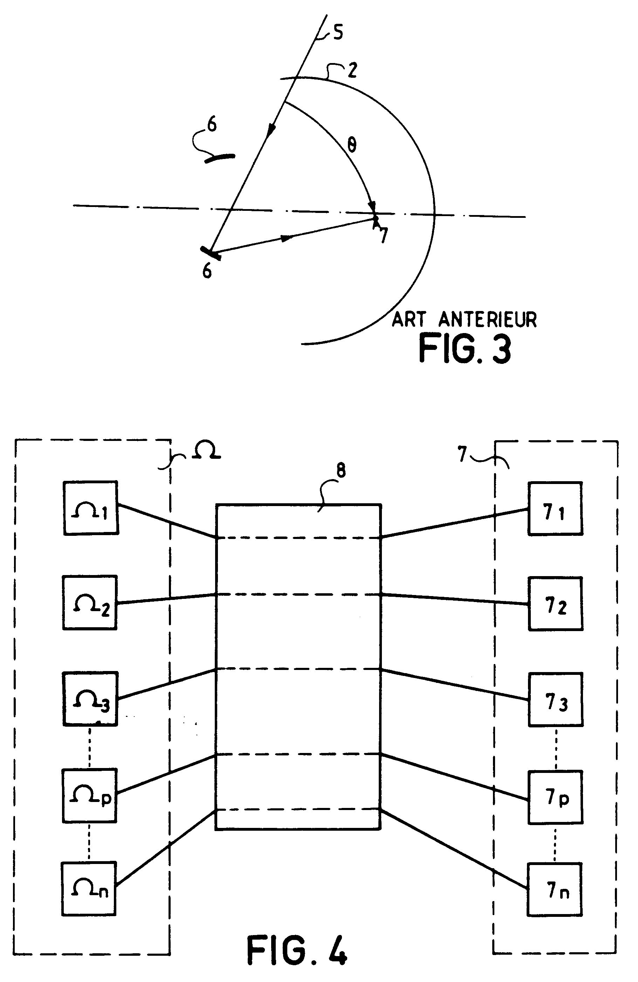

Sur la figure 2 le même missile 1 a été schématisé, approchant d'une cible 3 représentée par un triangle. La cible 3 comporte un point chaud 4.

Sur la figure 3, un rayon 5 en provenance du point chaud 4 (figure 2) pénètre dans le missile par la fenêtre 2. Ce rayon frappe un miroir de révolution 6 qui le renvoie sur un capteur 7 sensible à la radiation émise par le point chaud 4. Au reçu de la radiation, le capteur 7 émet un signal. Ce signal est amplifié et mis en forme de façon connue pour déclencher la mise à feu d'une charge militaire dont le volume d'efficacité a une symétrie de révolution autour de l'axe XX'.

Comme cela vient d'être illustré les détecteurs optroniques passifs connus dans l'art, ne détectent pas la "proximité" de la cible mais son passage travers.

La plus grande proximité entre la cible et le missile se fait souvent au moment où le missile passe par le travers de la cible. Ceci est particulièrement vérifié lorsque la cible et le missile ont des trajectoires convergentes. Lorsque les trajectoires ne sont pas convergentes il peut arriver, en particulier avec des cibles fortement manoeuvrantes, que le passage travers ne soit pas le point de plus grande proximité entre la cible et le missile. Il peut arriver aussi que la radiation captée proviennent d'une source lointaine, mais située dans le volume de détection, telle une cible autre que la poursuivie, un leurre ponctuel, le soleil si le capteur est sensible à l'une des ses radiations.

De plus les détecteurs connus dans l'art détectent le passage travers de la cible mais ne permettent pas de situer le secteur angulaire solide où se trouve la cible. De ce fait on est conduit à utiliser une charge dont le volume d'efficacité a une symétrie de révolution autour de l'axe XX' du projectile alors que pour la même masse, une charge a effets dirigés dans la direction de la cible aurait une efficacité bien supérieure.

Enfin les dispositifs connus, de par leur conception, doivent avoir un capteur 7 placé vers l'avant du missile.

L'intégration du système de refroidissement éventuel du détecteur peut alors s'avérer difficile.

Les moyens de traitement du signal peuvent quant à eux être déportés dans la mesure où le faible niveau des signaux issus des capteurs le permet mais il est alors nécessaire de consommer du volume disponible pour les connexions et le passage des câbles transportant le signal du capteur. Or dans une munition on cherche toujours à réduire la masse et le volume de tout ce qui n'est pas la charge militaire.

Une variante du modèle général de l'art antérieur ci-dessus décrit et qui illustre bien les problèmes exposés ci-dessus, est constituée par le brevet US 4 195 574 qui sera par la suite appelé D1. Le problème essentiel résolu par le dispositif décrit dans D1 est de discriminer une cible par rapport à d'autres sources rayonnantes telles que des nuages ou le soleil. Le dispositif comporte une fenêtre avant 15, une fenêtre arrière 25. Les radiations issues de ces fenêtres se réfléchissent sur un miroir parabolique qui les réfléchit pour les unes vers un premier capteur 27 et pour les autres vers un second capteur 27, les premier et les second capteurs étant situés dans un plan parallèles à l'axe de la munition.

D'éventuelles nécessités de refroidissement ne sont pas mentionnées dans D1. Il est simplement dit que les fenêtres ont de petites dimensions pour limiter la quantité d'infrarouges admis. Par contre on voit que les connexions électriques étanches 33 (figure 2) occupent un volume non négligeable.

L'invention selon la revendication 1 a pour but de remédier aux inconvénients ci-dessus signalés. Elle vise notamment à la détermination du secteur angulaire solide dans lequel se trouve la cible, pour l'emploi en association avec une charge militaire à effets dirigés. Une charge militaire est dite à effets dirigés lorsque ses effets -souffle éclats - sont préférentiellement produits dans un secteur angulaire selon un angle de roulis prédéterminé.

L'invention vise aussi à reporter vers l'arrière de la munition ou du missile l'emplacement des capteurs de radiation de façon à simplifier l'implantation et l'architecture des moyens de refroidissement et des circuits de traitement du signal émis par les capteurs. Enfin dans certaines de ses configurations l'invention vise à une meilleure discrimination de la nature de la cible et de sa distance ce qui accroît son efficacité en présence de leurres artificiels ou naturels comme le soleil et certaines surfaces réfléchissant le soleil.

A toutes ces fins l'invention vise à affecter à un capteur particulier une partie seulement du volume de détection, elle a pour objet d'une part un dispositif optique destiné à permettre le découpage du volume de détection en secteurs affectables à un capteur particulier situé en arrière de la fenêtre de détection et d'autre part l'ensemble de détection comprenant le dispositif optique et les capteurs. Elle concerne enfin une munition comportant l'ensemble de détection en association avec des circuits de traitement du signal pour déclencher ou non la mise à feu selon le séquencement des signaux originaires des différents capteurs ou dans certaines configurations pour déterminer une attitude de la munition ou du missile par détermination de la direction du sol ou du ciel.

De façon plus précise l'invention a pour objet pour une munition ou un missile d'axe XX' équipé de moyens pour détecter le passage d'une cible émettrice de radiations, dans un volume $\Omega$ dit de détection délimité par des surfaces de révolution engendrées par des droites correspondant aux limites de champs d'une optique déterminée par la géométrie de capteurs diaphragmés, notamment par une fenêtre dite de détection, de forme sensiblement tronconique ou cylindrique de révolution autour de l'axe XX', d'affecter chacune des parties de volume en nombre n, $\Omega_1, \Omega_{2...n}$, comprises dans le volume $\Omega$ de façon univoque à un capteur particulier d'un ensemble de n capteurs.

Il est intéressant de découper le volume en secteurs angulaires délimités d'une part par les surfaces de révolution délimitant l'ensemble du volume de détection et d'autre part par m plans passant par l'axe de révolution de la munition, deux plans consécutifs faisant entre eux l'angle $\frac{2\pi}{m}$ (Dans ce cas m = n).

L'intérêt essentiel de l'invention étant de permettre l'emploi efficace d'une charge à effets dirigés,

l'angle $\frac{2\pi}{m}$ des secteurs de détection devra être égal ou inférieur au secteur angulaire d'efficacité maximum de la charge.

Lorsque le volume de détection est délimité par des surfaces de révolution autour de l'axe de la munition, le volume est souvent engendré comme il l'a été expliqué plus haut par deux droites coupant l'axe de la munition aux points 0' et 0", et s'appuyant sur les bords d'une fenêtre de révolution située à la périphérie de la munition, les deux droites faisant un angle $\tau$ avec l'axe optique $\Delta$ de la fenêtre. Dans un plan comportant l'axe de la munition, l'axe $\Delta$ est la droite passant par le point 0 et par le centre du segment représentant l'intersection de la fenêtre et du plan. Pour un tel volume, il est intéressant de le découper non seulement en secteurs angulaires définis comme ci-dessus mais aussi de diviser chacun des secteurs angulaires en deux parties une partie avant et une partie arrière. La partie avant est délimitée d'une part par la surface conique engendrée par la rotation de la droite passant par 0' faisant avec l'axe de la munition un angle $(\theta-\tau)$ et d'autre part par la surface conique engendrée par la droite passant par o' faisant avec l'axe de la munition un angle $(\theta - \frac{\tau}{p})$, p désignant un nombre supérieur à 1. La partie arrière est délimitée d'une part par la surface conique engendrée par la rotation de la droite passant par 0" faisant avec l'axe de révolution de la munition l'angle $(\theta + \tau)$ et par la surface conique engendrée par la droite passant par o" et faisant avec l'axe du missile un angle

$$[\theta + \tau\frac{(p-1)}{p}].$$

On remarque dans ce dernier cas que le volume de détection est divisé en 3 m parties n=3m puisque chacun des m secteurs angulaires est divisé en trois parties une partie avant, une partie arrière et entre les deux une partie centrale, l'intérêt de cette partie centrale sera expliqué ultérieurement. On peut cependant d'ores et déjà noter qu'il est indifférent dans ce cas que la surface découpée par l'intersection des surfaces délimitant le volume central avec la surface de la munition soit ou non une fenêtre. Cela signifie que dans ce cas la fenêtre peut être formée de deux surfaces transparentes situées l'une derrière l'autre.

Il a été indiqué plus haut que l'invention était également relative à un dispositif optique permettant d'affecter à chacun des volumes découpé un capteur particulier situé en arrière de la fenêtre de détection. Plus précisément, l'invention est relative à un dispositif optique de révolution autour d'un axe XX' du type comportant en représentation dans un plan P contenant l'axe XX' une fenêtre comportant un point avant A et un point arrière B, laissant passer les radiations en provenance d'une direction $\Delta$ faisant avec l'axe XX' un angle $\theta$ inférieur à 90° l'angle d'ouverture $2\tau$ du dispositif étant déterminé par la géométrie de la surface sensible de capteurs, vers lesquels le dispositif optique dirige les radiations caractérisé en ce qu'il comporte deux miroirs $M_1$, $M_2$ et une lentille convergente L le miroir $M_1$ étant représenté en coupe par le plan P par l'arc CD d'une parabole $P_{m1}$ ayant pour foyer un point F situé en avant du point 0, pour axe de symétrie un axe $\Delta_1$ parallèle à $\Delta$ et passant par F, les extrémités de l'arc C et D étant définies en fonction du champs angulaire de l'optique pour l'obtention de l'ouverture optimale, le miroir $M_2$ étant représenté en coupe par le plan P par un arc de parabole $P_{m2}$ ayant pour axe de symétrie un axe $\delta$ passant par F et faisant avec l'axe XX' un angle $\alpha$ faible, et pour foyer le point F ; enfin la lentille L ayant pour axe XX' et son centre optique sensiblement au niveau de l'intersection de la parabole $P_{m1}$ avec l'axe XX'.

L'angle $\alpha$ est choisi de tel sorte que les rayons issus du miroir $M_2$ et qui repartent parallèlement à $\delta$ croisent l'axe XX' au niveau de la lentille L.

Le dispositif ci-dessus décrit permet de faire correspondre de façon biunivoque à chaque élément d'angle solide d $\Omega$ ayant son sommet en 0 et situé dans le volume de détection un élément de surface plane dV situé dans le plan focal de la lentille L.

Ainsi le dispositif optique qui vient d'être décrit peut-il être utilisé avec des capteurs plans disposés dans le plan focal de la lentille de surface $V_1$, $V_2$, $V_3$...$V_n$ chacun des n capteurs ainsi disposés correspondant respectivement à l'un des angles solides $\Omega_1, \Omega_2,...\Omega_n$.

L'invention sera maintenant décrite en référence aux dessins annexés dans lesquels:

La figure 4 illustre dans sa forme la plus générale la correspondance entre les volumes et les capteurs.

Les figures 5 et 6 illustrent le mode et une forme de découpage du volume de détection.

Les figures 7 et 8 illustrent une autre forme de découpage du volume de détection.

La figure 9 est un schéma destiné à illustrer la forme du miroir $M_1$.

La figure 10 est un schéma destiné à illustrer la forme du miroir $M_2$.

La figure 11 est une coupe longitudinale partielle d'une munition montrant l'ensemble du détecteur selon l'invention.

Les figures 12 à 15 illustrent la dispositif que l'on peut donner à des capteurs du commerce en fonction des découpages de volume choisis.

La figure 16 illustre l'intérêt d'une configuration particulière de l'invention.

Sur la figure 4 on voit un moyen 8 qui a chaque partie $\Omega_1, \Omega_2, \Omega_P ...\Omega_n$, du volume de détection total $\Omega$ fait correspondre de façon biunivoque un capteur $7_1$, $7_2,...7_P...7_n$ faisant partie d'un ensemble de capteurs 7.

La somme des n parties de volume du volume $\Omega$ peut être égale ou inférieure au volume total $\Omega$. Par contre l'ensemble 7 des n capteurs 71...7n associés à chacune des parties de volume $\Omega$ constitue l'ensemble de capture complet.

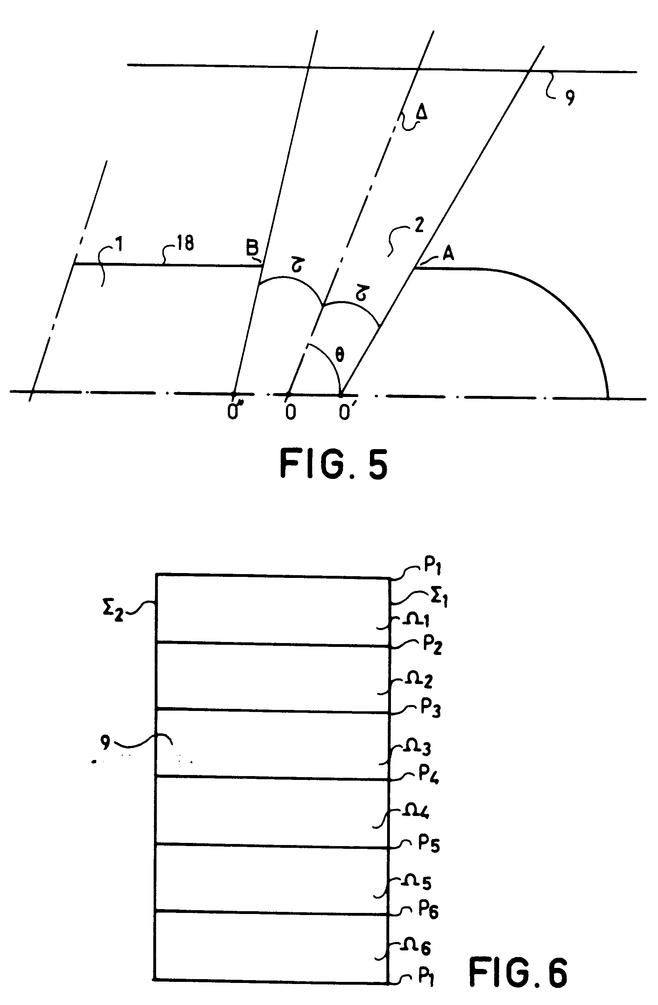

Les figures 5 et 6 sont destinées à illustrer la forme habituelle du volume et un premier mode de découpage de ce volume.

Sur la figure 5 on voit la partie avant d'une munition 1 comportant une enveloppe 18, un axe de révolution XX' et une fenêtre de détection 2 transparente aux radiations auxquelles sont sensibles des capteurs dont la forme sera décrite plus loin. La représentation de la figure 5 est une coupe dans un plan contenant XX'. Dans cette représentation la fenêtre 2 apparaît comme une interruption de l'enveloppe 18 de la munition. Dans ce plan les axes optiques $\Delta$ de la fenêtre font avec l'axe XX' un angle $\theta$, l'angle d'ouverture est matérialisé par l'angle $\tau$ que font chacune des droites 0'A et 0''B avec l'axe $\Delta$. Les points A et B sont les bords avant et arrière de la fenêtre 2. Le volume total de détection est le volume compris entre les deux surfaces coniques ($\Sigma_1$, $\Sigma_2$) engendrées par la rotation des deux droites 0'A et 0''B autour de l'axe XX'.

Pour illustrer un premier mode de découpage de ce volume il a été représenté sur la figure 5 un cylindre fictif 9. Dans un premier mode de découpage le volume $\Omega$ est découpé par des plans $P_1....P_m$ contenant XX' et faisant entre eux des angles égaux à $\dfrac{2\pi}{m}$. Les surfaces découpées sur le cylindre 9 par chacun des plans $P_1$, $P_2...P_m$ et les surfaces coniques $\Omega_1$, $\Omega_2$... sont représentées sur la figure 6 à plat, cylindre 9 déroulé. Sur la figure 6, m est égal à 6.

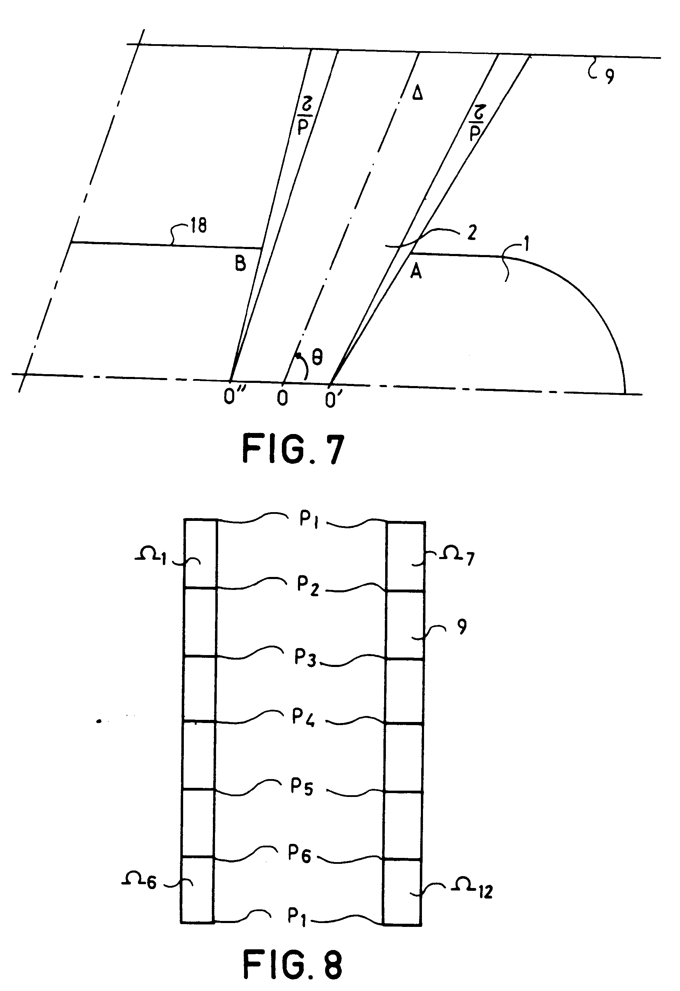

Les figures 7 et 8 illustrent un autre mode de découpage dans lequel le volume de détection a été découpé en une partie avant et une partie arrière, la partie avant étant un volume délimité par deux surfaces engendrées par la rotation de deux droites, la droite 0'A et une droite faisant avec elle l'angle $\dfrac{\tau}{p}$, p >1, autour de l'axe XX'. La partie arrière est un volume limité par les surfaces engendrées par la droite 0''B et une droite faisant avec 0''B l'angle $\dfrac{\tau}{p}$.

Ces deux volumes sont à leur tour divisés en secteur par des plans $P_1... P_m$ passant par XX'.

La figure 8 représente comme précédemment les surfaces découpées sur le cylindre fictif 9 par les surfaces délimitant chacune des parties de volumes. Il s'agit de rectangles comme dans le cas précédent mais plus étroit et en nombre double. Sur la figure m a été choisi égal à 6. Dans ce cas n est égal à 12 et la somme de ces 12 volumes ne représente par le volume total puisque la partie centrale n'est pas utilisée.

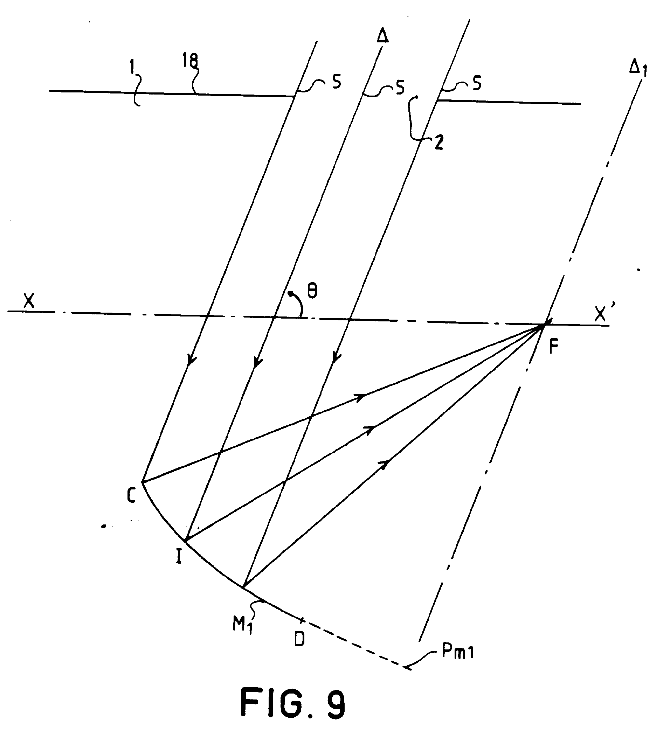

La figure 9 explicite la forme et la fonction du miroir $M_1$. Il est rappelé que le miroir $M_1$ est le premier miroir d'un dispositif 8 qui dans ce cas est optique permettant de faire correspondre à chaque partie élémentaire d'un volume d $\Omega$ une surface élémentaire dV.

Sur la figure 9 ont été représentés un rayon 5 provenant de la direction $\Delta$ à travers la fenêtre 2 du projectile. Il touche un miroir $M_1$ au point I. Le miroir $M_1$ est un arc d'une parabole $P_{m1}$ de foyer F. Le point F est situé en avant du point 0. La parabole a pour axe de symétrie la parallèle à $\Delta$, $\Delta_1$ passant par le point F. Il s'ensuit que tous les rayons parallèles à $\Delta$ frappant $M_1$ seront réfléchis vers F qui est ainsi le point de convergence des rayons en provenance de la direction $\Delta$. L'arc est limité aux points C et D déterminés pour obtenir une ouverture maximale du champ angulaire de l'optique. C'est dans la configuration de la figure 9 la taille de miroir qui permet l'exploitation maximale de l'ouverture de la fenêtre.

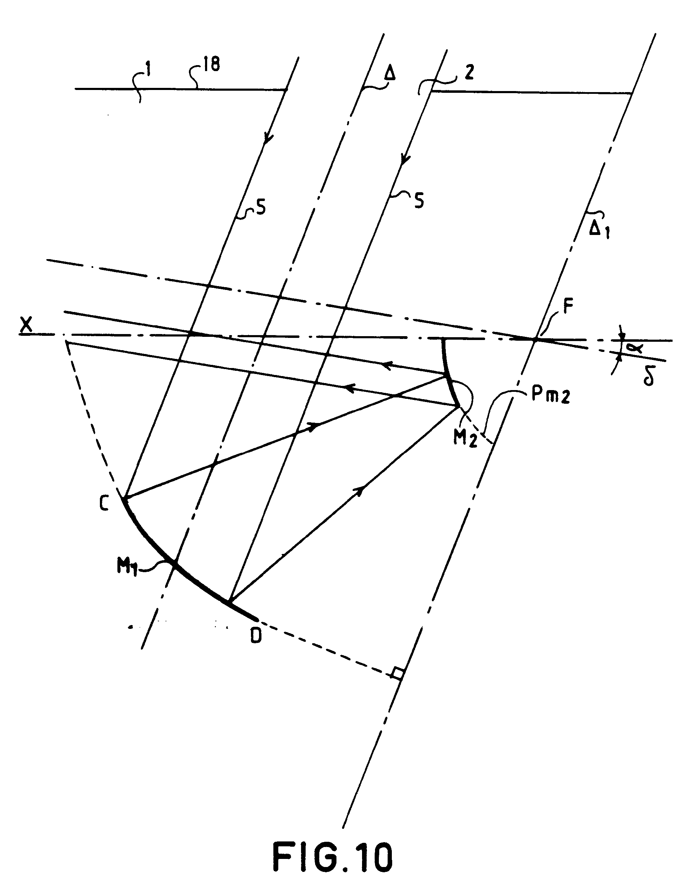

La position, la forme et le rôle du miroir $M_2$ seront maintenant explicités en référence à la figure 10.

Cette figure reprend les mêmes éléments que la figure 9 mais l'on voit apparaître le miroir $M_2$. Ce dernier est un miroir convexe de révolution obtenu par rotation autour de XX' d'un arc d'une parabole $P_{m2}$. Cette parabole a pour axe une droite $\delta$ passant par F, foyer du miroir $M_1$, et faisant avec l'axe XX' de la munition un angle $\alpha$, en général faible. Les rayons en provenance du miroir $M_1$ et se dirigeant vers le foyer F sont réfléchis parallèlement à $\delta$. L'angle $\alpha$ entre $\delta$ et XX' est choisi de telle sorte que les rayons issus du miroir $M_2$ croisent l'axe XX' au niveau où est placée sur cet axe une lentille convergente 12 dont il sera parlé plus loin. De la sorte les rayons convergeant vers F sont renvoyés vers l'arrière parallèlement à l'axe $\delta$.

D'après ce qui vient d'être expliqué les paraboles $P_{M1}$ et $P_{M_2}$ sur lesquelles sont découpés les arcs correspondant aux miroirs $M_1$ et $M_2$ ne sont définies que par leurs axes de symétrie et leurs foyers. Il existe donc deux familles de paraboles convenables pour la fonction à obtenir. Les paraboles de ces familles ne diffèrent que par la position de leur directrice. Les choix dans les deux familles seront réalisés en tenant compte des contraintes qui sont :

- les dimensions de la munition, diamètre et longueur de l'emplacement disponible ;
- la nécessité pour le miroir $M_2$ d'être aussi proche que possible de 0 tout en laissant le libre passage des rayons de la fenêtre 2 vers le miroir $M_1$ ;
- la nécessité pour la surface Vp représentant un volume $\Omega$p d'être de la taille d'un capteur ou d'un groupe de capteurs disponibles sur le marché.

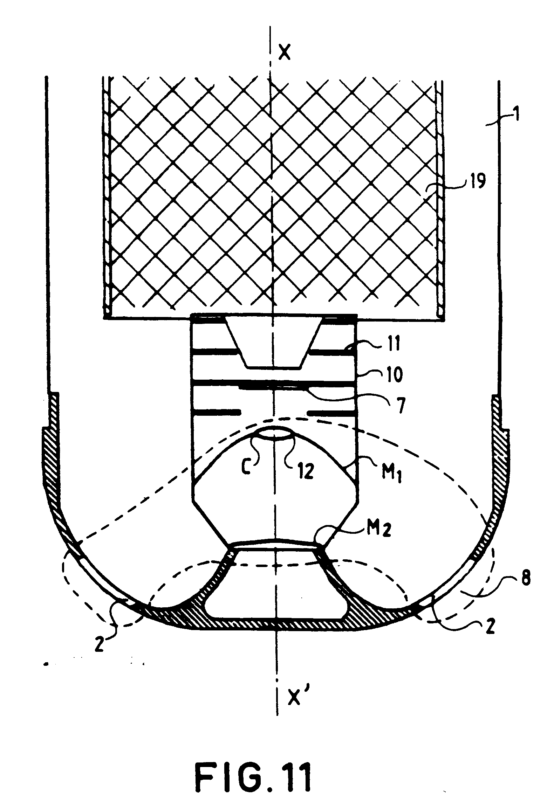

L'architecture de l'ensemble du dispositif de détection sera maintenant explicitée en référence à la figure 11 qui est une vue en coupe longitudinale d'une munition 1, comportant le dispositif optique 8, les capteurs 7, un dispositif 10 d'amplification du ou des signaux en provenance des capteurs 7 un circuit logique 11 de traitement des signaux amplifiés et mis en forme par le dispositif 10, et une charge militaire 19 à effets dirigés .

Sur cette figure on voit l'ensemble du dispositif optique 8. Ce dispositif comporte, la fenêtre 2 muni d'un filtre non représenté. Ce filtre permet de restreindre la sélection qui ne serait dû qu'au seul domaine de sensibilité des capteurs 7. Il comporte également les miroirs $M_1$ et $M_2$ dont la forme, la position et la fonction ont été définis précédemment.

Il comporte enfin une lentille convergente 12 de même axe que l'axe de révolution de la munition placée perpendiculairement à celui-ci, soutenue par une structure s'appuyant sur le bord C du miroir $M_1$. Cette lentille fait converger les rayons en provenance du miroir $M_2$ vers une plaquette de détecteurs 7. Elle permet aussi un ajustement de la surface V correspondant au volume de détection de façon à ce que chaque partie de volume soit représentée par une surface correspondant aux dimensions d'un capteur existant sur le marché. Les dispositifs 10 et 11 ne seront pas décrits autrement que par leur fonction, leur réalisation étant à la portée de l'homme du métier.

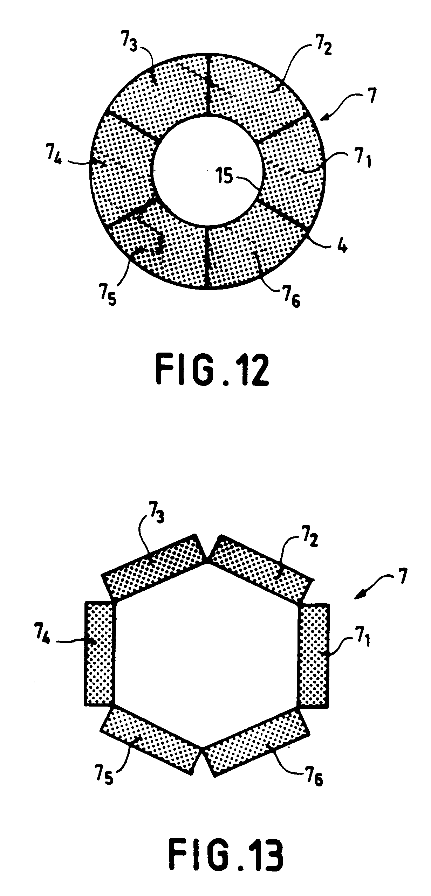

Des exemples de dispositions de plaquettes 7 seront maintenant décrits en référence aux figures 12 à 15.

Il a été vu (description des figures 5 et 6) qu'à chacun des secteurs angulaires $\Omega_1... \Omega_n$ d'un volume de détection, le principe de l'invention était de faire correspondre de façon biunivoque un capteur et un seul. Il a été vu également que le dispositif optique 8 faisait correspondre à chaque élément de volume $d\Omega$ une surface plane dV dans le plan focal de la lentille 12. On remarquera à ce stade que le dispositif 8 donne du volume de détection une image plane totale ayant pour forme la surface $S_1$ comprise entre deux cercles de même centre. Le découpage de la surface et donc du volume pour reconnaître un secteur volumique particulier est donc en fait le résultat de la disposition des capteurs.

Dans le cas décrit par les figures 5 et 6 l'image plane est représentée pour le volume total par la surface apparaissant en grisé sur la figure 12 entre deux cercles 14 et 15. Chacun des secteurs $\Omega_1$ à $\Omega_6$ correspond à un secteur $7_1$ à $7_6$ de la couronne ainsi dessinée. Idéalement les 6 capteurs $7_1$ à $7_6$ devraient donc avoir la forme représentée sur la figure 12.

Les capteurs existants sont soit des capteurs isolés en général de forme rectangulaire soit des matrices de capteurs par exemple des rétines pyroélectriques. Ces rétines sont composées de capteurs carrés disposés en lignes et colonnes chacun des capteurs formant un pixel de l'image rétinienne totale. Chacun des emplacements de pixel est défini par son adresse représentée par un numéro de ligne et un numéro de colonne. Chaque pixel est adressable indépendamment des autres pixels.

Les capteurs choisis devront donc être disposés, ou adressés dans le cas des rétines, de façon à approcher au mieux l'image représentée figure 12 où chaque capteur $7_1$ à $7_6$ a idéalement la forme d'une portion de couronne.

Ainsi dans le cas de capteurs isolés la disposition pourra avoir la forme représentée figure 13 où les grands côtés de capteurs rectangulaires $7_1$ à $7_6$ sont placés côte à côte de façon à former un polygone régulier.

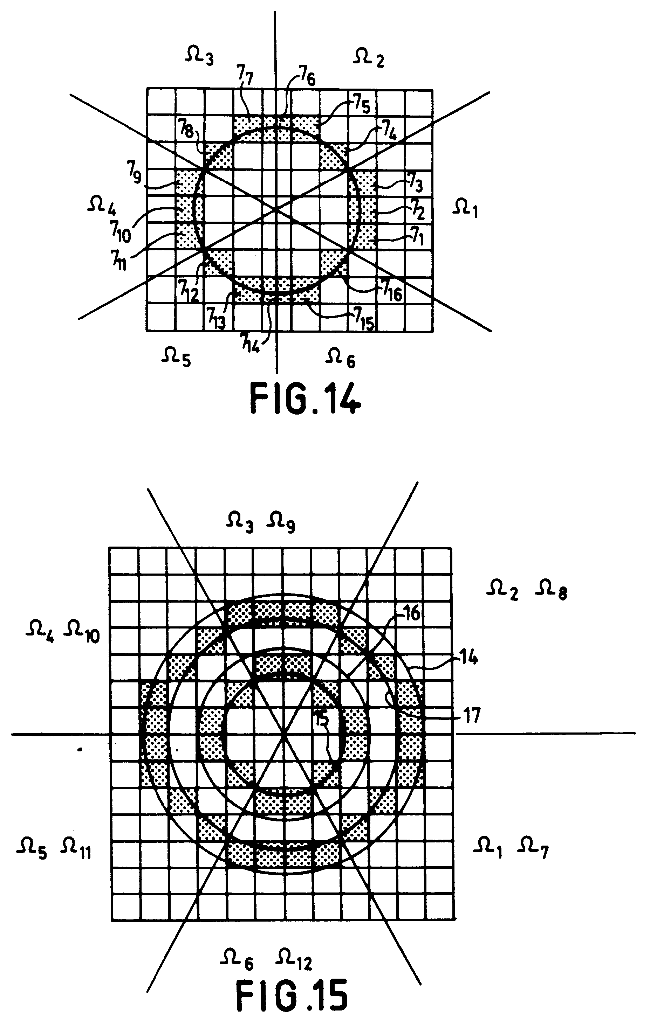

Dans le cas d'une rétine, les capteurs adressés pourront être ceux que traverse un cercle ayant pour centre l'un des pixels et pour rayon la distance de ce centre à l'un des points de jonction entre quatre pixels formant un carré comme cela est représenté figure 14.

Dans le cas représenté figure 13 chaque capteur correspond à un secteur volumique particulier et il n'y a pas de capteur présent sur deux secteurs. Le traitement du signal est donc simple il suffit de décider que la cible se trouve dans le secteur angulaire correspondant au capteur recevant le signal ou, en cas de deux réceptions de signal par deux capteurs consécutifs, dans le secteur correspondant au capteur recevant le plus fort signal. Compte-tenu des compromis à réaliser il peut aussi arriver qu'un capteur soit présent sur deux secteurs.

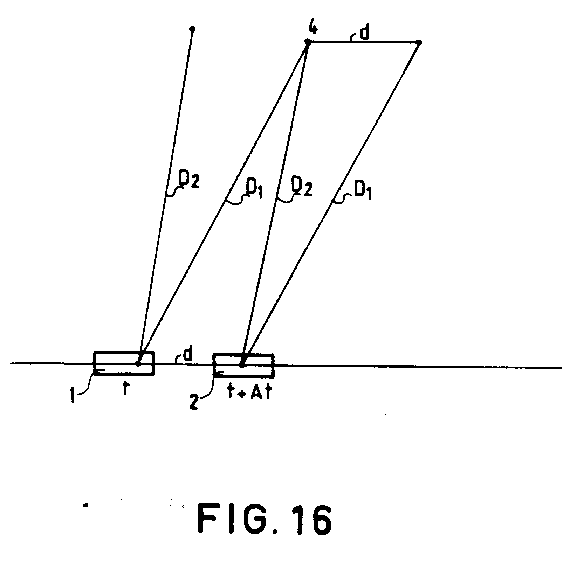

Dans le cas particulier représenté figure 14, 16 pixels référencés $7_1$ à $7_{16}$ forment une approximation de la surface $S_1$, le découpage en 6 secteurs $\Omega_1$ à $\Omega_6$ de 60°. chacun fait correspondre aux secteurs $\Omega_1$ et $\Omega_4$ les pixels $7_1$ à $7_3$ et $7_9$ à $7_{11}$ sans recoupements ; les pixels $7_4$ $7_5$, $7_7$ $7_8$, $7_{12}$ $7_{13}$, $7_{15}$ $7_{16}$ représentent sans ambiguïté une partie des secteurs $\Omega_2$, $\Omega_3$, $\Omega_5$, $\Omega_6$.

Par contre les pixels $7_6$ et $7_{14}$ sont présents sur deux secteurs $\Omega_2$ $\Omega_3$, $\Omega_5$ $\Omega_6$ respectivement. Si aucun signal reçu sur l'un des pixels voisins ne permet une levée de doute le traitement du signal reçu par l'un de ces deux pixels pourra être dans ce cas une simple décision affectant à l'un des 2 secteurs la présence de la cible. D'autres traitements sont possibles mais ne seront pas abordés car ils dépendent de la manière dont la directivité de la charge est obtenue.

La figure 15 illustre d'une part une seconde façon de choisir les pixels d'une matrice pour former une couronne et d'autre part un choix possible lorsque l'on souhaite former l'image des secteurs $\Omega_1$ à $\Omega_{12}$ représentés figures 7 et 8.

Sur la figure 15, le volume total de détection est représenté par la surface $S_1$ comprise entre les cercles 14 et 15. L'ensemble des parties de secteurs angulaires $\Omega_1$ à $\Omega_6$ est représenté par la surface $S_2$ comprise entre les cercles 14 et 17 et l'ensemble des parties de secteurs angulaires $\Omega_7$ à $\Omega_{12}$ est représenté par la surface $S_3$ comprise entre les cercles 15 et 16.

Les cercles 14 à 16 sont concentriques. Leur centre commun est situé au point de jonction de 4 pixels formant un carré et leur rayon est égal à un nombre entier de côtés de carré formant un pixel. Dans le cas représenté figure 15 pour m = 6 chacune des parties de secteur $\Omega_1$ à $\Omega_6$ est représentée par 2 pixels et chacune des parties de secteurs $\Omega_7$ à $\Omega_{12}$ est représentée par quatre pixels.

Les capteurs 7 utilisés peuvent être par exemple des capteurs photovoltaïques réalisés en matériau InSb ou Hg Cd Te dont les proportions de Hg Cd et Te sont adaptées pour permettre la détection dans la bande de radiations choisie. Dans le cas de rétines le circuit de multiplexage peut être assuré par un dispositif à transfert de charge.

Le fonctionnement de la munition équipée du dispositif 8, des capteurs 7 des circuits 10 et 11 et d'une charge à effets dirigés 19 est le suivant : lorsque l'un au moins des capteurs 7 reçoit une radiation se situant dans sa bande de sensibilité, ce capteur émet un signal qui est amplifié et mis en forme par le circuit 10. Si le signal présente une amplitude et une durée supérieures à des seuils prédéterminés le circuit logique 11 déclenche la mise à feu de la charge 19 de façon à diriger les effets de la charge dans le secteur correspondant à l'adresse du capteur origine du signal.

Dans le cas où le capteur a la configuration définie par la figure 15 le signal de mise à feu est en outre subordonné à un temps maximum écoulé entre le signal d'un capteur de la surface $S_3$ et le signal d'un capteur de la surface $S_2$, et par une cohérence des informations de secteurs reçues des capteurs de $S_3$ et de $S_2$. L'intérêt de ce choix logique est illustré par la figure 16. Cette figure représente un point chaud 4 dont les radiations sont captées au temps t par un capteur de la surface $S_2$ et au temps t + $\Delta$t par un capteur de la surface $S_3$. Sur la figure 16 les droites $D_1$ et $D_2$ correspondent aux axes des faisceaux de capture avant et arrière représentés figure 7. Pendant le temps $\Delta$t le missile a parcouru la distance d. La vitesse du missile étant mesurée ou estimée il est possible de connaître ou d'estimer d. A partir de cette connaissance il est possible de calculer, tous les angles étant connus, la distance du point chaud 4.

La taille de la source rayonnante peut également être évaluée par la durée de réception d'un signal sur un ou plusieurs capteurs.

Les traitements effectués par le circuit logique 11 pourront avoir pour fonction à partir d'informations sur la durée des signaux reçus par chacun des capteurs, de leur adresse, des temps écoulés entre des réceptions de signaux par différents capteurs, l'élimination des leurres naturels ou artificiels ou des cibles trop lointaines. Dans le cas de munitions rustiques les différences de niveau de signaux de longue durée reçus par la moitié des capteurs correspondant aux secteurs d'observation du ciel et la moitié correspondant aux secteurs d'observation de la terre pourront être traitées par le circuit de mise en forme 10 et logique 11 pour en déduire de façon grossière une position de roulis de la munition.

Il convient de noter d'une façon générale que l'invention ne vise pas à la détermination très précise d'éléments sectoriels. Il suffit que la détermination obtenue soit suffisamment bonne pour que la charge 19 produise majoritairement avec une bonne probabilité ses effets dans un secteur où se trouve la cible.

## Revendications

1. Dispositif optique de révolution autour d'un axe XX', pour la capture de radiations en provenance d'une cible dans un volume $\Omega$ de révolution autour de l'axe XX', le volume $\Omega$ étant divisé en n parties de volume $\Omega_1$, $\Omega_2$ ...$\Omega_n$, le dispositif étant destiné à équiper une munition ou un missile pour affecter de façon univoque les radiations en provenance d'une partie $\Omega_1$,$\Omega_2$ ...$\Omega_n$, du volume $\Omega$ à un capteur ou groupes de capteurs formant un ensemble de n capteurs ou groupe de capteurs, le dispositif ayant en représentation en coupe longitudinale dans un plan P contenant l'axe XX', une fenêtre de détection comportant un point avant A et un point arrière B, laissant passer les radiations en provenance d'un axe $\Delta$ sécant en un point 0 avec l'axe XX' et faisant avec lui un angle $\theta$ inférieur à 90°, l'angle d'ouverture 2 $\tau$ de la fenêtre étant représenté par l'angle de deux droites 0'A et 0''B faisant chacune avec l'axe $\Delta$ l'angle $\tau$, la droite 0'A déterminant par rotation autour de l'axe XX' une surface délimitant l'avant du volume $\Omega$, la droite 0''B déterminant par rotation autour de l'axe XX' une surface délimitant l'arrière du volume $\Omega$, dispositif caractérisé en ce qu'il comporte deux miroirs $M_1$, $M_2$ et une lentille convergente (12) le miroir $M_1$ étant représenté en coupe par le plan P, par l'arc d'une parabole $P_{M_1}$ ayant pour foyer un point F situé en avant du point 0, pour axe de symétrie une axe $\Delta_1$ parallèle à $\Delta$ et passant par F, le miroir M2 étant, représenté en coupe par le plan P par un arc de parabole $P_{M2}$ ayant pour axe de symétrie (1) un axe $\delta$ passant par F et faisant avec l'axe XX' un angle $\alpha$ faible, et pour foyer le point F ; enfin la lentille (12) ayant son centre optique sur l'axe XX' sensiblement au niveau de l'intersection de la parabole $P_{M_1}$ avec l'axe XX'.

2. Dispositif selon la revendication 1 caractérisé en ce que les points les plus arrières C du miroirs $M_1$ et les plus avant D de ce miroir sont déterminés en fonction de l'obtention de l'ouverture optimale sur tout le champ de l'optique.

3. Dispositif selon l'une des revendication 1 ou 2 caractérisé en ce qu'il comporte en outre placé dans un plan K perpendiculaire à l'axe XX' au niveau du plan focal de la lentille (12) un ensemble de capteurs (7) composé d'au moins m capteurs disposés de façon à reproduire aussi fidèlement que possible une surface $S_1$ délimitée par deux cercles (14, 15).

4. Dispositif selon la revendication 3, caractérisé en ce qu'il comporte m capteurs rectangulaires ayant deux petits côtés et deux grands côtés, placés de telle sorte que la ligne formée par l'un des grands côtés de chacun des capteurs soit un polygone régulier.

5. Dispositif selon la revendication 3, caractérisé en ce que les capteurs sont les pixels d'une matrice de détecteurs ou d'une rétine pyroélectrique les pixels utiles étant choisis de telle sorte qu'au moins un cercle concentrique aux cercles (14 et 15) délimitant la surface $S_1$ puisse être dessiné entièrement sur la surface des pixels utiles.

6. Dispositif selon la revendication 1 caractérisé en ce qu'il comporte en outre placé dans un plan K perpendiculaire à l'axe XX' au niveau du plan focal de la lentille (12) un ensemble de capteurs (7) composé d'au moins 2 m capteurs disposés de façon à reproduire aussi fidèlement que possible deux surfaces $S_2$ et $S_3$ une première surface $S_2$ et une seconde surface $S_3$ délimitées chacune par deux cercles les quatre cercles ayant le même centre et le cercle (16) de plus grand rayon de la première surface $S_2$ ayant un rayon plus petit que le cercle (17) de plus petit rayon de la seconde surface $S_3$.

7. Dispositif selon l'une des revendications 3 à 6, caractérisé en ce que le matériau composant les capteurs est du InSb ou Hg Cd Te dont les proportions de Hg, Cd et Te sont adaptées pour permettre la détection dans la bande de radiations choisie.

8. Munition ou missile comportant un dispositif selon l'une des revendication 1 à 7.

9. Munition ou missile comportant un dispositif selon une des revendications 4 à 7, caractérisé en ce que la munition ou le missile comporte en outre un circuit électronique 10, couplé à chacun des capteurs d'observation d'une partie du volume $\Omega$, le circuit électronique (10) fournissant un signal amplifié, mis en forme, et comportant une information identifiant une adresse des capteurs ayant émis un signal, un circuit logique (11) recevant les signaux en provenance du circuit électronique et produisant un signal de mise à feu si le résultat d'une comparaison des signaux reçus à des normes prédéterminées de caractérisation d'un signal est favorable, et enfin une charge militaire (19) à effet dirigées principalement dans un secteur d'ouverture $\frac{2\pi}{m}$, capable d'être mise à feu au reçu d'un signal en provenance du circuit logique (11), la charge (19) pouvant être positionnée ou mise à feu pour produire ses effets dans un secteur correspondant à l'adresse du capteur ayant reçu les radiations.

10. Munition ou missile comportant un dispositif selon l'une des revendications 4 à 7, caractérisé en ce que la munition ou le missile comporte en outre un circuit électronique 10, couplé à chacun des capteurs d'observation d'une partie du volume $\Omega$, le circuit électronique (10) fournissant un signal amplifié, mis en forme, et comportant une information identifiant une adresse des capteurs ayant émis un signal, un circuit logique (11) recevant les signaux en provenance du circuit électronique et produisant un signal de mise à feu si le résultat d'une comparaison des signaux reçus à des normes prédéterminées de caractérisation d'un signal est favorable et si des conditions de délai prédéterminées entre la réception d'un signal en provenance d'un capteur de S2 et la réception d'un signal d'un capteur correspondant de S3 sont respectés, et, enfin une charge militaire (19) à effet dirigées principalement dans un secteur d'ouverture $\frac{2\pi}{m}$, capable d'être mise à feu au reçu d'un signal en provenance du circuit logique (11), la charge (19) pouvant être positionnée ou mise à feu pour produire ses effets dans un secteur correspondant à l'adresse du capteur ayant reçu les radiations.

11. Munition ou missile comportant un dispositif selon l'une des revendications 8 à 10 caractérisé en ce qu'il comporte en outre des circuits (10, 11) traitant des différences entre des niveaux de signaux de longue durée reçus par une moitié des capteurs et des niveaux de signaux de longue durée reçus par l'autre moitié des capteurs pour en déduire une position en roulis de la munition ou du missile.

**Patentansprüche**

1. Um eine Achse XX′ rotationssymmetrische optische Vorrichtung zur Erfassung von Strahlungen von einem Ziel in einem um die Achse XX′ rotationssymmetrischen Volumen $\Omega$, wobei das Volumen $\Omega$ in n Volumenteile $\Omega_1$, $\Omega_2$ ... $\Omega_n$ unterteilt ist, wobei die Vorrichtung zur Ausrüstung einer Munition oder einer Lenkwaffe bestimmt ist, um die Strahlungen von einem Teil $\Omega_1$, $\Omega_2$ ...$\Omega_n$ des Volumens $\Omega$ eindeutig einem Sensor oder Sensorgruppen zuzuweisen, die eine Einheit aus n Sensoren oder Sensorgruppen bilden, wobei die Vorrichtung in der Darstellung im Längsschnitt in einer Ebene, die die Achse XX′ enthält, ein Erfassungsfenster besitzt, das einen vorderen Punkt A und einen hinteren Punkt B aufweist und die Strahlungen von einer Achse $\Delta$ durchläßt, die in einem Punkt 0 die Achse XX′ schneidet und mit ihr einen Winkel $\theta$ von weniger als 90° bildet, wobei der Öffnungswinkel $2\tau$ des Fensters durch den Winkel zweier Geraden 0′A und 0″B dargestellt ist, die mit der Achse $\Delta$ jeweils den Winkel $\tau$ bilden, wobei die Gerade 0′A durch Drehung um die Achse XX′ eine Fläche bestimmt, die den vorderen Teil des Volumens $\Omega$ abgrenzt, wobei die Gerade 0″B durch Drehung um die Achse XX′ eine Fläche bestimmt, die den hinteren Teil des Volumens $\Omega$ abgrenzt, dadurch gekennzeichnet, daß die Vorrichtung zwei Spiegel $M_1$, $M_2$ und eine Konvexlinse (12) aufweist, wobei der Spiegel $M_1$ im Schnitt durch die Ebene P durch einen Parabelbogen $P_{M1}$ dargestellt ist, der als Fokus einen Punkt F besitzt, der vor dem Punkt 0 liegt, als Symmetrieachse ein Achse $\Delta_1$ besitzt, die parallel zu $\Delta$ liegt und durch F verläuft, wobei der Spiegel $M_2$ im Schnitt durch die Ebene P durch einen Parabelbogen $P_{M2}$ dargestellt ist, der als Symmetrieachse (1) eine Achse $\delta$ besitzt, die durch F verläuft und mit der Achse XX′ einen spitzen Winkel $\alpha$ bildet, und als Fokus den Punkt F besitzt; daß schließlich das optische Zentrum der Linse (12) auf der Achse XX′ im wesentlichen beim Schnittpunkt der Parabel $P_{M1}$ mit der Achse XX′ liegt.

2. Vorrichtung nach Anspruch 1, dadurch gekennzeichnet, daß die hintersten Punkte C des Spiegels $M_1$ und die vordersten Punkte D dieses Spiegels in Abhängigkeit vom Erhalt der optimalen Öffnung auf das gesamte optische Feld bestimmt sind.

3. Vorrichtung nach einem der Ansprüche 1 oder 2, dadurch gekennzeichnet, daß sie ferner in einer zur Achse XX′ senkrechten Ebene K auf Höhe der Brennebene der Linse (12) eine Einheit aus Sensoren (7) aufweist, die aus wenigstens m Sensoren besteht, die derart angeordnet sind, daß sie so getreu wie möglich eine Fläche S1 wiedergeben, die durch zwei Kreise (14, 15) abgegrenzt ist.

4. Vorrichtung nach Anspruch 3, dadurch gekennzeichnet, daß sie m rechteckige Sensoren mit zwei Schmalseiten und zwei Längsseiten aufweist, die derart angeordnet sind, daß die von einer der Längsseiten jedes der Sensoren gebildete Linie ein regelmäßiges Vieleck ist.

5. Vorrichtung nach Anspruch 3, dadurch gekennzeichnet, daß die Sensoren Pixel einer Matrix aus Detektoren oder einer pyroelektrischen Retina sind, wobei die Nutzpixel derart gewählt sind, daß wenigstens ein zu den Kreisen (14 und 15), die die Fläche $S_1$ abgrenzen, vollständig auf der Fläche der Nutzpixel gezeichnet werden kann.

6. Vorrichtung nach Anspruch 1, dadurch gekennzeichnet, daß sie ferner in einer zur Achse XX′ senkrechten Ebene K auf Höhe der Brennebene der Linse (12) eine Einheit aus Sensoren (7) aufweist, die aus wenigstens 2m Sensoren besteht, die derart angeordnet sind, daß sie so treu wie möglich zwei Flächen $S_2$ und $S_3$ wiedergeben, wobei eine erste Fläche $S_2$ und eine zweite Fläche $S_3$ jeweils durch zwei Kreise abgegrenzt ist, wobei die vier Kreise das gleiche Zentrum besitzen und der Kreis (16) der ersten Fläche $S_2$ mit dem größeren Radius einen kleineren Radius als der Kreis (17) der zweiten Fläche $S_3$ mit dem kleineren Radius besitzt.

7. Vorrichtung nach einem der Ansprüche 3 bis 6, dadurch gekennzeichnet, daß das Material, aus dem die Sensoren bestehen, InSb oder HgCdTe ist, dessen Masseanteile derart angepaßt sind, daß die Erfassung im gewählten Strahlungsband möglich wird.

8. Munition oder Lenkwaffe, die eine Vorrichtung nach einem der Ansprüche 1 bis 7 aufweist.

9. Munition oder Lenkwaffe, die eine Vorrichtung nach einem der Ansprüche 4 bis 7, dadurch gekennzeichnet, daß die Munition oder die Lenkwaffe ferner eine elektronische Schaltung 10, die mit jedem der Beobachtungssensoren eines Teils des Volumens $\Omega$ gekoppelt ist, wobei die elektronische Schaltung (10) ein verstärktes und aufbereitetes Signal liefert, das eine Information aufweist, die eine Adresse der Sensoren identifiziert, die ein Signal ausgesandt haben, wobei eine Logikschaltung (11) die Signale von der elektronischen Schaltung empfängt und eine Zündungssignal erzeugt, wenn das Ergebnis eines Vergleichs der empfangenen Signale mit vorbestimmten Normen zur Charakterisierung eines Signals günstig ist, und schließlich eine militärische Ladung (19) mit hauptsächlich in einen Öffnungssektor $\frac{2\pi}{m}$ gerichteter Wirkung aufweist, die bei Empfang eines Signals von der Logikschaltung (11) gezündet werden kann, wobei die Ladung (19) derart positioniert oder gezündet werden kann, daß sie ihre Wirkungen in einem Sektor erzeugt, der der Adresse des Sensors entspricht, der die Strahlen empfangen hat.

10. Munition oder Lenkwaffe, die eine Vorrichtung nach einem der Ansprüche 4 bis 7 aufweist, dadurch gekennzeichnet, daß die Munition oder die Lenkwaffe ferner eine elektronische Schaltung 10 enthält, die mit jedem der Beobachtungssensoren eines Teils des Volumens $\Omega$ gekoppelt ist, wobei die elektronische Schaltung (10) ein verstärktes und aufbereitetes Signal liefert, das eine Information aufweist, die eine Adresse der Sensoren identifiziert, die ein Signal ausgesandt haben, eine Logikschaltung (11) enthält, die Signale von der elektronischen Schaltung empfängt und eine Zündungssignal erzeugt, wenn das Ergebnis eines Vergleichs der empfangene Signale mit vorbestimmten Normen zur Charakterisierung eines Signals günstig ist und wenn die vorbestimmten Verzögerungsbedingungen zwischen dem Empfang eines Signals von einem Sensor von S2 und dem Empfang einem Signal eines entsprechenden Sensors von S3 eingehalten sind, und schließlich eine militärische Ladung (19) mit hauptsächlich in einen Öffnungssektor $\frac{2\pi}{m}$ gerichteter Wirkung enthält, die bei Empfang eines Signals von der Logikschaltung (11) gezündet werden kann, wobei die Ladung (19) derart positioniert oder gezündet werden kann, daß sie ihre Wirkungen in einem Sektor erzeugt, der der Adresse des Sensors entspricht, der die Strahlen empfangen hat.

11. Munition oder Lenkwaffe mit einer Vorrichtung nach einem der Ansprüche 8 bis 10, dadurch gekennzeichnet, daß sie ferner Schaltungen (10, 11) aufweist, die Unterschiede zwischen Pegeln von Signalen langer Dauer, die von einer Hälfte der Sensoren empfangen werden, und Pegeln von Signalen, die von der anderen Hälfte der Sensoren empfangen werden, verarbeiten, um daraus eine Rollposition der Munition oder der Lenkwaffe abzuleiten.

## Claims

1. Optical device, with symmetry of revolution about an axis XX′, for capture of radiation originating from a target in a volume $\Omega$ of revolution about the axis XX′, the volume $\Omega$ being divided into n parts of volume $\Omega_1$, $\Omega_2$...$\Omega_n$, the device being intended to equip a munition or a missile in order to assign in one-to-one fashion the radiation originating from a part $\Omega_1$, $\Omega_2$... $\Omega_n$ of the volume $\Omega$ to a sensor or groups of sensors forming a set of n sensors or group of sensors, the device having, in representation in longitudinal section in a plane P containing the axis XX′, a detection window including a front point A and a rear point B, allowing passage of the radiation originating from an axis $\Delta$ secant at a point 0 to the axis XX′ and making therewith an angle $\theta$ of less than 90°, the aperture angle $2\tau$ of the window being represented by the angle of two straight lines 0′A and 0″B, each making the angle $\tau$ with the axis $\Delta$, the straight line 0′A defining, by rotation about the axis XX″, a surface delimiting the front of the volume $\Omega$, the straight line 0″B defining, by rotation about the axis XX′, a surface delimiting the rear of the volume $\Omega$, which device is characterized in that it includes two mirrors $M_1$, $M_2$ and a converging lens (12) the mirror $M_1$ being represented, in section through the plane P, by the arc of a parabola $P_{m1}$ having as focus a point F located in front of the point O and having as axis of symmetry an axis $\Delta_1$ parallel to $\Delta$ and passing through F, the mirror M2 being represented, in section through the plane P, by a parabola arc $P_{m2}$ having as axis of symmetry (1) an axis $\delta$ passing through F and making a small angle $\alpha$ with the axis XX′, and having as focus the point F; finally, the lens (12) having its optical centre on the axis XX′, substantially at the intersection of the parabola $P_{m1}$ with the axis XX′.

2. Device according to Claim 1, characterized in that the rearmost points C of the mirrors $M_1$ and the foremost points D of this mirror are defined as a function of obtaining optimum aperture over the entire field of the optics.

3. Device according to one of Claims 1 and 2, characterized in that it furthermore includes, placed in a plane K perpendicular to the axis XX′ at the focal plane of the lens (12), a set of sensors (7) composed of at least m sensors arranged so as to reproduce as faithfully as possible a surface $S_1$ delimited by two circles (14, 15).

4. Device according to Claim 3, characterized in that it includes m rectangular sensors, having two short sides and two long sides, placed in such a way that the line formed by one of the long sides of each of these sensors is a regular polygon.

5. Device according to Claim 3, characterized in that the sensors are pixels of a matrix of detectors or of a pyroelectric retina, the useful pixels being chosen in such a way that at least a circle concentric with the circles (14 and 15) delimiting the surface $S_1$ can be drawn fully on the surface of the useful pixels.

6. Device according to Claim 1, characterized in that it furthermore includes, placed in a plane K perpendicular to the axis XX′ at the focal plane of the lens (12), a set of sensors (7) composed of at least 2 m sensors arranged so as to reproduce as faithfully as possible two surfaces $S_2$ and $S_3$, a first surface $S_2$ and a second surface $S_3$, each delimited by two circles, the four circles having the same centre and the circle (16) of larger radius of the first surface $S_2$ having a smaller radius than the circle (17) of smaller radius of the second surface $S_3$.

7. Device according to one of Claims 3 to 6, characterized in that the material of which the sensors are composed is InSb or Hg Cd Te, in which the proportions of Hg, Cd and Te are adapted in order to allow detection in the chosen radiation band.

8. Munition or missile including a device according to one of Claims 1 to 7.

9. Munition or missile including a device according to one of Claims 4 to 7, characterized in that the munition or the missile furthermore includes an electronic circuit (10), coupled to each of the sensors for observing a part of the volume $\Omega$, the electronic circuit (10) supplying a signal which is amplified, shaped and includes information identifying an address of the sensors that have emitted a signal, a logic circuit (11) receiving the signals originating from the electronic circuit and producing an ignition signal if the result of a comparison of the received signals with predetermined standards for characterizing a signal is favourable, and finally a military charge (19) with effect directed principally in a sector of aperture $\dfrac{2\pi}{m}$, capable of being ignited on receiving a signal originating from the logic circuit (11), the charge (19) being capable of being positioned or ignited in order to produce its effects in a sector corresponding to the address of the sensor that has received the radiation.

10. Munition or missile including a device according to one of Claims 4 to 7, characterized in that the munition or the missile furthermore includes an electronic circuit (10), coupled to each of the sensors for observing a part of the volume $\Omega$, the electronic circuit (10) supplying a signal which is amplified, shaped and includes information identifying an address of the sensors that have emitted a signal, a logic circuit (11) receiving the signals originating from the electronic circuit and producing a firing signal if the result of a comparison of the received signals with predetermined standards for characterizing a signal is favourable, and if predetermined delay conditions between the reception of a signal originating from a sensor of S2 and the reception of a signal from a corresponding sensor of S3 are respected and finally a military charge (19) with effect directed principally in a sector of aperture $\frac{2\pi}{m}$, capable of being ignited on receiving a signal originating from the logic circuit (11), the charge (19) being capable of being positioned or ignited in order to produce its effects in a sector corresponding to the address of the sensor that has received the radiation.

11. Munition or missile including a device according to one of Claims 8 to 10, characterized in that it furthermore includes circuits (10, 11) processing the differences between the long-term signal levels received by one half of the signals and long-term signal levels received by the other half of the sensors, in order to deduce therefrom a roll position of the munition or of the missile.

FIG.1

FIG.2

ART ANTERIEUR

ART ANTERIEUR
FIG. 3

FIG. 4

FIG. 5

FIG. 6

FIG. 7

FIG. 8

FIG. 9

FIG.10

FIG.11

FIG.12

FIG.13

FIG.14

FIG.15

FIG. 16